# EUROPÄISCHE PATENTANMELDUNG

(11) **EP 2 109 154 A1**
(43) Veröffentlichungstag der Anmeldung: **14.10.2009**
(21) Anmeldenummer: 08013454.7
(22) Anmeldetag: 25.07.2008
(51) Int. Cl.: H01L 31/052, H01L 31/058, F24J 2/20, F24J 2/24

(54) **Kühl-, bzw. Thermoelement insbesondere für Photovoltaikmodule**

(30) Priorität: 09.04.2008 DE 202008004965 U
(71) Anmelder: Wismeth, Wolfgang, 90765 Fürth (DE); Eurich, Torsten, 63584 Gründau (DE); Kalkhof, Klaus, 63584 Gründau (DE)
(72) Erfinder: Wismeth, Wolfgang, 90765 Fürth (DE); Eurich, Torsten, 63584 Gründau (DE); Kalkhof, Klaus, 63584 Gründau (DE)
(74) Vertreter: Kirchner, Veit

(57) **Zusammenfassung**

Die vorliegende Erfindung betrifft ein Thermoelement insbesondere für Photovoltaik - Solarmodule zur Anbringung an Photovoltaikmodulen um die Photovoltaikzellen des Moduls abzukühlen oder anzuwärmen. Erfindungsgemäß zeichnet sich das Thermoelement dadurch aus, dass das Thermoelement über in oder auf diesem integrierten oder an- bzw. aufgebrachten Kanälen oder Rohren für ein thermisch leitendes Kühl- oder Heizmedium für die Wärme- Zu- oder Abfuhr verfügt und mittels wenigstens einer Fixiereinrichtung im Wesentlichen vollflächig mit der Unterseite der PV Zellen eines Photovoltaik Moduls in Verbindung bringbar ist und über wenigstens einen Vor- und einen Rücklaufanschluss verfügt, über welche ein Kühl- oder ein Heizmedium durch die integrierten oder an- bzw. aufgebrachten Kanäle oder Rohre strömt.

## Beschreibung

Die Erfindung betrifft ein Kühl-, bzw. Thermoelement insbesondere für bevorzugt standardisierte Photovoltaikmodule (PV Module) bzw. Solarmodule, welches die Aufgabe eines Sonnenkollektors erfüllt und gleichzeitig die Funktion der Kühlung der PV Module erfüllt.

Wurden vor einigen Jahren zur Nutzung der Sonnenenergie meist Solarkollektoren insbesondere auf Hausdächern installiert so ist derzeit eine steigende Tendenz bei Photovoltaikanlagen zu beobachten, mit welchen Sonnenenergie direkt in elektrische Energie umgewandelt werden kann. In Deutschland werden allein etwa 7 bis 10 Millionen Photovoltaikmodule für solche Installationen jährlich verbaut, weltweit wird mit ca. 40 Millionen gerechnet, wobei die Tendenz steigend ist.
Immer öfter werden Dächer auch mit beiden Techniken ausgerüstet um mittels einer Photovoltaikanlage das Sonnenlicht in elektrische Energie umzuwandeln und die Wärme der Sonnenstrahlung mittels eines Sonnenkollektors zu nutzen.

Bei Photovoltaikanlagen ist bekannt, dass nur etwa 20% der solaren Einstrahlung in Strom umgewandelt werden, der Rest wird auch auf diesen Anlagen in Wärme umgewandelt und geht in der Regel verloren. Zusätzlich aber führt die entstehende Wärme und die damit einhergehende starke Erwärmung der PV Module zu einem deutlich schlechteren Wirkungsgrad der Photovoltaikanlagen. Untersuchungen haben gezeigt, dass sich die Energieeffizienz um jeweils ca. 0,4% pro Abkühlung um 1 °C in Richtung der vom Hersteller des PV Moduls angegebenen Effizienz verbessert werden könnte.
In Testanlagen und Berechnungen wurden bei einer effektiven Kühlung der PV Module jährliche Verbesserungen bezüglich des Gesamtleistungsniveaus von 15% ermittelt.

Dahingehend gibt es auch einige Ansätze Photovoltaikanlagen, bzw. deren Solarelemente währen des Betriebes abzukühlen.
In der DE 41 20 943 A1 wird z.B. ein kombiniertes PV Modul mit einem Kollektorblech zur Wärmeabfuhr vorgestellt, wobei die Zellen des PV Moduls und das Kollektorblech fest durch Kleben verbunden werden.
Die DE 195 09 430 A1 schlägt dagegen eine Konstruktion vor, bei welcher die PV Module einer Photovoltaikanlage auf Bleche montiert werden, welche streifenförmig zunächst auf einen Untergrund, z.B. Hausdach montiert sind und über welche die Wärme abgeführt werden kann.

Nachteilig bei den bekannten Vorrichtungen oder Verfahren ist, dass diese die verwendeten PV Module entweder nicht effektiv genug abkühlen oder nur sehr aufwendig und kostenintensiv zu montieren und zu betreiben sind.

Aufgabe der vorliegenden Erfindung ist es daher, ein Kühl-, bzw. Thermoelement insbesondere für PV Module zu schaffen, welches die genannten Nachteile umgeht, leicht zu montieren ist und die abgeführte Wärme nutzbar macht.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Thermoelement insbesondere für Photovoltaik - Solarmodule zur Anbringung an Photovoltaikmodulen um die Photovoltaikzellen des Moduls Abzukühlen oder Anzuwärmen, wobei das Thermoelement über in oder auf diesem integrierten oder an- bzw. aufgebrachten Kanälen oder Rohren für ein thermisch leitendes Kühl- oder Heizmedium für die Wärme- Zu- oder Abfuhr verfügt und mittels wenigstens einer Fixiereinrichtung im Wesentlichen vollflächig mit der Unterseite der PV Zellen eines Photovoltaik Moduls in Verbindung bringbar ist und über wenigstens einen Vor- und einen Rücklaufanschluss verfügt, über welche ein Kühl- oder ein Heizmedium durch die integrierten oder an- bzw. aufgebrachten Kanäle oder Rohre strömt.

Die überwiegend verwendeten PV Module für die Installation einer Photovoltaikanlage bestehen aus einer Konstruktion aus einer Trägerplatte und einer transparenten, lichtdurchlässigen, meist aus Glas bestehenden Platte zwischen welchen die einzelnen PV Zellen angeordnet sind und zu einem Verbund zusammen geschlossen sind.
Dieses Plattensandwich ist üblicherweise in einem Rahmen eingebaut, welcher nach unten einen Überstand aufweist, damit noch ein Zwischenraum verbleibt, wenn dieses Modul auf einer Fläche aufgestellt oder montiert ist. Meist befindet sich auch die Anschlusseinheit für ein solches Modul auf der Unterseite innerhalb dieses Rahmenüberstands.

Das erfindungsgemäße Thermoelement wird in diesen Rahmen eingelegt und schließt bevorzugt flächig auflegend an der Unterseite der PV Zellen und mit dem Rahmen des PV Moduls ab und wird mittels Fixiereinrichtungen arretiert. Als Fixiereinrichtungen dienen entweder entsprechende Überstände des Rahmens des PV Moduls, wobei das Thermoelement dann in den Rahmen eingeschoben wird oder falls solche nicht vorhanden sind entsprechend ausgeführte z.B. Stahlklammern welche das Thermoelement, ähnlich der Rückseite in einem Bilderrahmen, festklemmen.

Durch diese Ausgestaltung ist jedes übliche, bzw. standardisierte PV Modul mit diesem erfindungsgemäßen Thermoelement ausrüstbar und jedes bereits eingesetzte PV Modul leicht nachrüstbar, womit es zu einem Kombinationselement Sonnenkollektor mit PV Modul wird.

Da das Thermoelement über jeweils wenigstens einen Vor- und Rücklauf verfügt sind diese ähnlich wie die elektrischen Anschlüsse an jedem PV Modul einfach in gewünschten Einheiten kombinierbar und zusammenschließbar. Eine aufwendige Installation eines entsprechenden Untergrunds für die PV Module entfällt somit, da lediglich die Montagearbeiten für übliche PV Module nötig sind, einzig die Verbindungen der Thermoelemente untereinander muss zusätzlich erfolgen.
Die für eine Installation erforderlichen PV Module sind dann meist schon mit den Thermoelementen versehen und es kann praktisch eine Installation einer Sonnenkollektor und einer Photovoltaikanlage in einem Montageeinsatz erfolgen.

In einer bevorzugten Ausführung ist das Thermoelement als eine selbsttragende Platte ausgeführt in welche die medienführenden Kanäle oder Rohre eingebracht oder aufgebracht sind und welche bevorzugt mit Federstahlelementen am Rahmen des PV Moduls fixiert wird. Je nach Eigenstabilität der Platte selbst wird diese dann nur randseitig am Rahmen des PV Moduls befestigt oder es wird für einen verbesserten flächigen Andruck des Thermolements ein, über die Mitte der Therolementplatte verlaufenden, Fixierelement verwendet um den flächigen Andruck des Thermolements auf die Unterseite der Zellen des PV Moduls zu verbessern.
Besonders vorteilhaft und effektiv hat sich die Ausführung erwiesen in welcher das Thermoelement in den Rahmen des PV Moduls eingeschoben wird und in diesem randseitig komplett gehalten wird. Für diese Ausführung ist ein endseitig, als U-Profil ausgeführter Rahmen mit einer an einer Seite offenen Umrandung vorzusehen. In dieser Ausführung kann das Thermoelement ganz ohne zusätzliche Fixiereinrichtungen und zusätzlichen Montage aufwand auskommen, da dieses direkt in den Rahmen eingeschoben und flächig gegen die Unterseite der Zellen im PV Modul angedrückt wird.

Das Thermoelement kann auch als flexible Matte aus thermisch leitendem Material ausgeführt sein, welche über innere, medienleitende Schläuche verfügt und welche mittels einer zusätzlichen Andruckplatte gegen die Unterseite der Zellen des PV Moduls flächig gedrückt und dort fixiert wird.

In einer bevorzugten Ausführung ist das Thermoelement als Platte aus einem thermisch leitenden Kunststoffmaterial ausgeführt, in welche medienführende Kanäle bzw. Rohre eingebracht oder aufgebracht sind. Diese Kanäle können über die Fläche des Thermoelements verteilt schlangenförmig (Mäanderverrohrung) oder geradlinig (Hafenverrohrung) angeordnet sein. Die einzelnen Thermoelemente werden über ihre Vor- und Rückläufe zusammengeschlossen und an ein Umwälzsystem angeschlossen, die somit abgeführte thermische Energie kann z.B. mittels eines Wärmetauschers, eines Speichers oder einer Wärmepumpe weitreichend genutzt werden.

In weiteren Varianten ist das Thermoelement als Platte, z.B. aus Metall ausgeführt, auf welcher Rohre aus einem thermisch leitenden Material aufgebracht, wie z.B. geklebt, gelötet, geschweißt oder dgl. sind und in welchen das Kühl-, bzw. Heizmedien gefördert wird, ausgeführt. Auch diese Rohre können in verschiedenen Anordnungen auf der Platte ausgeführt sein und stehen bevorzugt in einem flächigen Kontakt mit der Unterseite der PV Zellen des PV Moduls um einen guten thermischen Kontakt zu erzielen.

Das erfindungsgemäße Thermoelement in den verschiedenen Ausführungen ergänzt eine Photovoltaikanlage um eine Sonnekolektoranlage zur Nutzung der thermischen Energie bei gleichzeitiger Kühlung und somit Verbesserung der Leistungseffizienz der Photovoltaikanlage. Durch diese Kombination ergibt sich zum einen ein optimierter Platzbedarf und die Photovoltaikanlage kann im Bedarfsfall, z.B. in der Winterzeit durch kurzzeitiges Einspeisen (Umkehr) und Durchströmung der Thermoelemente mit warmem Medien beheizt und somit schneefrei gemacht werden, damit die PV Anlage eingesetzt werden kann.

Im Folgenden wird die Erfindung anhand von Zeichnungen beispielhaft näher beschrieben. Dabei zeigen:
- Fig. 1: eine perspektivische Darstellung eines angestrahlten Photovoltaikmoduls mit Thermoelement
- Fig. 2: ein Photovoltaikelement von unten mit installiertem Thermoelement
- Fig. 3: ein Photovoltaikelement von unten mit installiertem Thermoelement in anderer Ausführung
- Fig. 4: ein Photovoltaikelement von unten mit installiertem Thermoelement in Ausführung mit Hohlkammerplatte

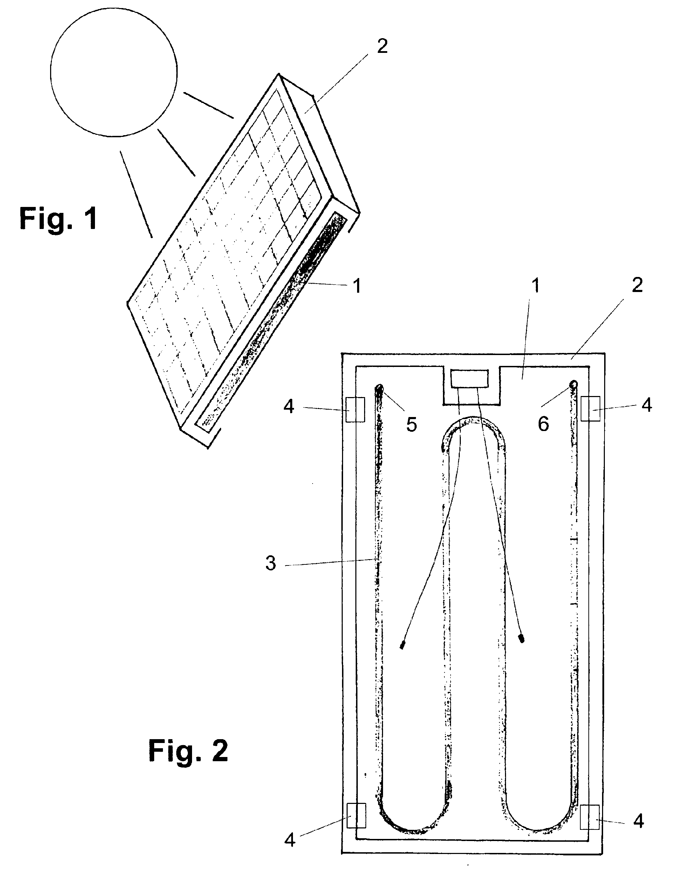

In Fig. 1 ist ein standardisiertes Photovoltaikmodul 2 zu sehen, welches in einer sehr verbreiteten Ausführung mit einem umlaufenden Rahmen ausgeführt ist. Das Modul 2 selbst besteht aus den PV Zellen, die untereinander verbunden sind und zwischen einer Trägerplatte und einer transparenten Abdeckplatte eingelegt sind. Dieses Sandwich ist wiederum in den Rahmen eingelegt.
In der Zeichnung ist der Rahmen an der von vorne zu sehenden Seite offen gelassen um die Positionierung des erfindungsgemäßen Thermoelements 1 zu zeigen.
Dies ist aber auch eine Variante der Ausführung der Erfindung, da hier das vorbereitete Thermoelement 1 in das PV Modul 2 eingeschoben werden kann und dort somit fixiert ist, da es von dem umlaufenden, umgeschlagenen Rahmen des Moduls 2 gehalten wird und bei entsprechender Höhe des Thermoelemntes 1, dieses flächig an der Unterseite der Photovoltaikzellen anliegt.

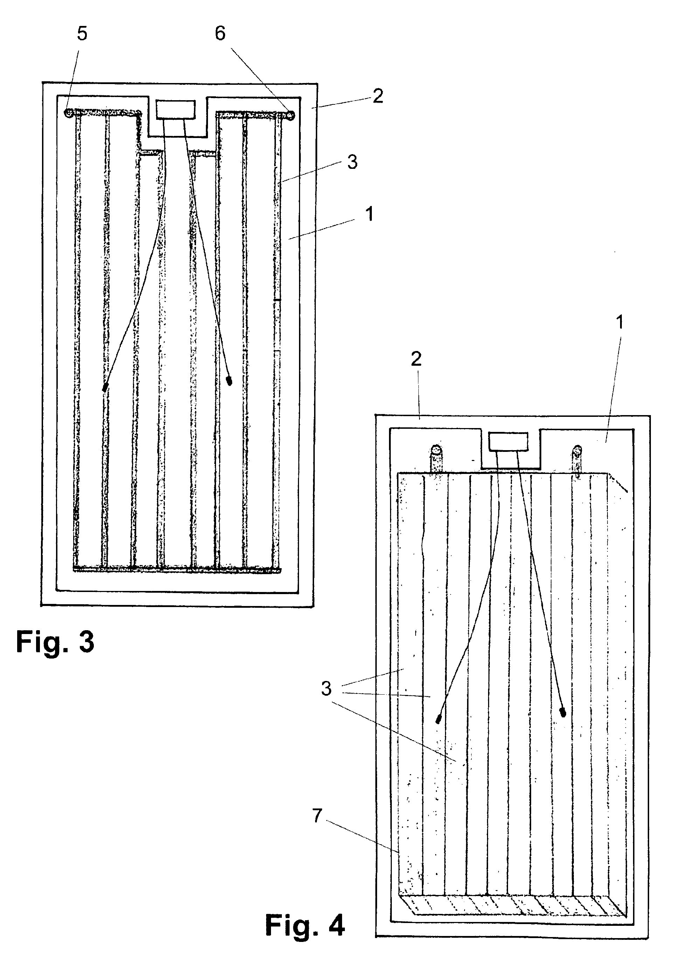

Fig. 2 zeigt eine Ausführung des Thermoelements 1, welches, mittels hier, beispielhaft gezeigten Fixiereinrichtungen 4, bevorzugt aus Federstahl an dem Rahmen des PV Moduls 2 fixiert ist.
Das Thermoelement selbst ist hier als eine Trägerplatte, mit auf dieser aufgesetzten und befestigten Rohrschlange, ausgeführt. Die Rohrschlange selbst hat einen Vorlauf 5 und einen Rücklauf 6, mittels welcher dieses Element mit weiteren in Reihe oder an einen Verteiler parallel verbunden werden können und durch welche im Betrieb das Kühl- bzw. Heizmedium geleitet wird. Eine denkbare Ausführung wäre auch eine selbsttragende Rohrschlange, welche dann mittels entsprechender Fixierstangen an dem Rahmen befestigt werden könnten und von einer Seite des Rahmens zur gegenüberliegenden reichen.
Auch kann das verwendete Kühlrohrsystem 3 eine andere Geometrie aufweisen, wie z.B. in Fig 3 gezeigt mit geraden Rohrverläufen um optimal auf verschiedene Anforderungen der Kühlleistung, bzw. Wärmeabfuhr angepasst zu werden.

Eine weitere Ausführung eines Thermoelements 1 ist in der Fig. 4 gezeigt, in welcher ein Thermoelement 7 in Hohlkammerversion zu sehen ist und bei welchen praktisch die gesamte zur Verfügung stehende Fläche, mit Ausnahme der Stege zwischen den einzelnen Kammern 3, als Kühlfläche dient.

Die Photovoltaikmodule können bereits vor der Installation der Module auf dem Dach mit den entsprechenden Thermoelementen bestückt und ggf. getestet werden und danach sehr einfach auf das Dach verschafft und in üblicher Weise montiert werden. Zur Montage der gleichzeitig verfügbaren Sonnenkollektor und Photovoltaikanlage ist lediglich zusätzlich die Verbindung der Kühlleitungen bei der Montage vorzunehmen.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Thermoelement insbesondere für Photovoltaik - Solarmodule zur Anbringung an Photovoltaikmodulen um die Photovoltaikzellen des Moduls Abzukühlen oder Anzuwärmen,
**dadurch gekennzeichnet,**
**dass** das Thermoelement (1) über in oder auf diesem integrierten oder an- bzw. aufgebrachten Kanälen (3) oder Rohren für ein thermisch leitendes Kühl- oder Heizmedium für die Wärme- Zu- oder Abfuhr verfügt und mittels wenigstens einer Fixiereinrichtung (4) im Wesentlichen vollflächig mit der Unterseite der PV Zellen eines Photovoltaik Moduls (2) in Verbindung bringbar ist und über wenigstens einen Vor- (5) und einen Rücklaufanschluss (6) verfügt, über welche ein Kühl- oder ein Heizmedium durch die integrierten oder an- bzw. aufgebrachten Kanäle (3) oder Rohre (3) strömt.

2. Thermoelement nach Anspruch 1,
**dadurch gekennzeichnet,**
**dass** das Thermoelement (1) als wenigstens eine selbsttragende Platte ausgeführt ist und mittels wenigstens eines Federstahlelements (4), flächig an die Unterseite des Photovoltaik Moduls (2) fixiert wird.

3. Thermoelement nach Anspruch 1,
**dadurch gekennzeichnet,**
**dass** das Thermoelement (1) als flexible Matte ausgeführt ist und mit einer zusätzlichen stabilen Andruckplatte mittels wenigstens eines Federstahlelements, welches im wesentlichen mittig über wenigstens eine Seite des Thermoelements (1) verläuft und am Rahmen des Photovoltaik Moduls (2) fixiert ist, flächig an die Unterseite des Photovoltaik Moduls (2) gedrückt wird.

4. Thermoelement nach Anspruch 1,
**dadurch gekennzeichnet,**
**dass** das Thermoelement (1) als Platte aus einem thermisch leitenden Kunststoffmaterial ausgeführt ist, in welche wenigstens ein, im Wesentlichen schlangenförmiger, Medienkanal (3), integriert ist.

5. Thermoelement nach Anspruch 1,
**dadurch gekennzeichnet,**
**dass** das Thermoelement (1) als Platte aus einem thermisch leitenden Kunststoffmaterial ausgeführt ist, in welche wenigstens ein, im Wesentlichen geradeverlaufender, Medienkanal (3), integriert ist.

6. Thermoelement nach Anspruch 1,
**dadurch gekennzeichnet,**
**dass** das Thermoelement (1) als Hohlkammerplatte (7) ausgeführt ist, in welche wenigstens ein Medienkanal (3), integriert ist.

7. Thermoelement nach Anspruch 1,
**dadurch gekennzeichnet,**
**dass** das Thermoelement (1) als Platte aus Metall oder Kunststoff ausgeführt ist, auf welcher wenigstens ein, im Wesentlichen schlangenförmiger Medienkanal (3), aufgebracht ist.

8. Thermoelement nach Anspruch 1,
**dadurch gekennzeichnet,**
**dass** das Thermoelement (1) als Platte aus Metall oder Kunststoff ausgeführt ist, auf welcher wenigstens ein, im Wesentlichen geradeverlaufender Medienkanal (3), aufgebracht ist.

9. Thermoelement nach Anspruch 1,
**dadurch gekennzeichnet,**
**dass** das Thermoelement (1) aus mehreren nebeneinander verlaufenden Platten aus Metall oder Kunststoff ausgeführt ist, auf welchen wenigstens ein geradlinig verlaufender Medienkanal (3) aufgebracht ist.

10. Medienkanal nach Anspruch 7 bis 9,
**dadurch gekennzeichnet,**
**dass** der Medienkanal (3) als Rohr- oder Schlauchschlange aus einem thermisch leitenden Material auf der Oberfläche der Platte ausgeführt ist.
